Europäisches Patentamt

European Patent Office

Office européen des brevets

(19)

(11) Veröffentlichungsnummer: **0 354 383**
**A1**

(12) **EUROPÄISCHE PATENTANMELDUNG**

(21) Anmeldenummer: **89113004.9**

(22) Anmeldetag: **15.07.89**

(51) Int. Cl.4: **B60T 8/56 , B60B 39/00**

(30) Priorität: **06.08.88 DE 3826775**

(43) Veröffentlichungstag der Anmeldung:
**14.02.90 Patentblatt 90/07**

(84) Benannte Vertragsstaaten:
**AT CH DE IT LI SE**

(71) Anmelder: **ROBERT BOSCH GMBH**
**Postfach 10 60 50**
**D-7000 Stuttgart 10(DE)**

(72) Erfinder: **Sedlmayr, Joachim, Dipl.-Ing.**
**Ulrich-Von-Hutten Strasse 16**
**D-7015 Korntal-Münchingen 1(DE)**

(54) **Verfahren und Vorrichtung zur Verbesserung von Traktion und Fahrstabilität bei Fahrzeugen.**

(57) Zur Verbesserung von Traktion und Fahrstabilität bei Kraftfahrzeugen, insbesondere Lastkraftwagen oder Omnibussen wird vorgeschlagen, automatisch bei Einsetzen einer Antriebsschlupfregelung geeignete traktionsverbessernde Systeme, beispielsweise Schleuderketten oder Splittstreuanlagen zu aktivieren, indem entsprechende Stellzylinder (1a,1b) für die traktionsverbessernden Systeme gleichzeitig mit dem ASR-Ventil (4) angesteuert werden.

Fig.1

EP 0 354 383 A1

## Verfahren und Vorrichtung zur Verbesserung von Traktion und Fahrstabilität bei Fahrzeugen

Stand der Technik

Die Erfindung geht aus von einem Verfahren nach dem Oberbegriff des Anspruchs 1 und einer Vorrichtung nach dem Oberbegriff des Anspruchs 3.

Durch die bekannte Möglichkeit der Kombination eines Antiblockiersystems (ABS) mit einer sogenannten Antriebsschlupfregelung (ASR) gelingt es,für den ABS-Bereich vorhandene Komponenten wie Radsensoren, Stellglieder u. dgl. auch für die Antriebsschlupfregelung auszunutzen, so daß sich in diesem Sinne eine Erweiterung der ABS-Systemmöglichkeiten ergibt (Aufsatz "Système antiblocage avec fonctions élargies" von M. Erich Reinecke, veröffentlicht in der Zeitschrift "Ingenieurs de l'Automobile", Seiten 110-116. Die Grundfunktion eines auf eine Antischlupfregelung erweiterten ABS-Systems besteht dann darin, daß auch beim Anfahren eine Steuerung der Radbewegungen, wenn auch in einem etwa umgekehrten Sinn als bei einem Antiblockiersystem erfolgt, indem die für das ABS-System vorgesehenen Sensoren ein mögliches Durchdrehen von (Antriebs)Rädern erfassen und durch Ansteuerung geeigneter Stellglieder dafür sorgen, daß es zu einer Bremsdruckerhöhung für das durchdrehende Rad kommt, so daß dieses abgebremst wird, bis sich wieder eine normale Radhaftung zur jeweiligen Straßenoberfläche einstellt. Eine solche Antriebsschlupfregelung ist nicht nur vorteilhaft, um bei schnellem Anfahren von mit starken Motoren ausgerüsteten Personenwagen ein Durchdrehen der Räder zu verhindern, sondern findet bevorzugten Einsatz zur Traktionserhöhung und zur Verbesserung der Fahrstabilität insbesondere unter winterlichen Verhältnissen, so daß es möglich ist, auch an vereisten oder verschneiten Steigungen noch anzufahren oder ein Durchdrehen eines der Antriebsräder zu vermeiden, wenn dieses auf einen Untergrund mit nur geringen Reibbeiwerten gelangt. Diese für sich gesehen umfassend bekannte Antriebsschlupfregelung (ASR) arbeitet daher in etwa nach Art einer Differentialsperre, vermeidet jedoch deren Nachteile und stellt sich ferner, da sie Bauelemente von ABS-Systemen mitbenutzen kann, als kostengünstiges Zusatzsystem bei der Erhöhung von Traktion und Fahrstabilität bei Kraftfahrzeugen zur Verfügung.

Zur Erhöhung von Reibbeiwerten insbesondere unter winterlichen Verhältnissen ist es ferner bekannt (Ver öffentlichung der Firma Robert Bosch GmbH, Stuttgart, VDT-UBB 160 (10.56) "Bosch-Splittstreuer"), mindestens vor die angetriebenen Räder von Kraftfahrzeugen, hauptsächlich Lastkraftwagen oder Omnibussen, Splittbehälter anzuordnen, die durch einen separaten, vom Fahrer manuell und daher abhängig von dessen Entscheidung zu betätigenden Schaltknopf oder Schaltring dazu veranlaßt werden können, im Bedarfsfall auf kürzere oder längere Strecken Splitt vor die Antriebsräder zu streuen. Hierzu ist ein von einem elektromagnetischen Steuerventil jeweils druckluftbetätigter Drehschieber jedem Splittstreubehälter zugeordnet, der auch eine Welle bewegt, so daß festgebackener Splitt losgebrochen werden kann.

Eine ähnliche Wirkung läßt sich durch den Einsatz sogenannter Schleuderketten erzielen (Zeitschrift Nutzfahrzeug, November 1986, Seiten 52-54), die in verschiedener Weise so im Bereich von (Antriebs)Rädern von Kraftfahrzeugen, hauptsächlich Omnibussen oder Lastkraftwagen angeordnet werden können, daß dem Fahrer einerseits das mühsame Auflegen von Ketten an Steigungen u. dgl. erspart bleibt, andererseits aber durch willkürliche Betätigung von Schaltern die Schleuderketten zur Erhöhung der Traktionsfähigkeit vor die Räder gebracht werden können. Solche Systeme können eine pneumatisch arbeitende Schwenkmechanik für die Schleuderkette aufweisen. Es sind aber auch elektromechanische Systeme mit sogenannten Rotogrip-Kettenteppichen bekannt. Splittstreuer und Schleuderketten dienen der Verbesserung des Bremsverhaltens unter winterlichen Bedingungen, insbeson dere bei vereisten Gefällestrecken u. dgl. und können auch zusammen mit ABS-Systemen eingesetzt werden, wie dies in der veröffentlichten europäischen Patentanmeldung 0078392 beschrieben ist. Dabei wird bei einem Straßenfahrzeug mit Antiblockiersystem ein Splittstreuer automatisch dann eingeschaltet, wenn das Antiblockiersystem anspricht, wobei allerdings, um Splitt zu sparen, die Betätigung erst dann erfolgt, wenn die Druckdifferenz vor und hinter den Regelventilen eine bestimmte Größe überschreitet und ein entsprechend niedriger Reibwert vorliegt. Zur Erfassung der Druckdifferenz ist ein Differenzdruckwandler mit nachgeschalteter Auswerteschaltung vorgesehen.

Mit der Splittstreueinrichtung vergleichbare Systeme sind ferner als sog. Sandstreuer bekannt (GB-PS 2 040 838 bzw. US-PS 3 797 867), wobei durch Betätigung eines Fuß- oder Handschalters vom Fahrerraum aus entweder Sand aus einem zentralen Behälter aufgrund der Schwerkraftwirkung vor die Antriebsräder gebracht werden kann (GB-PS 2 040 838) oder pneumatisch durch Erzeugung eines Luftstroms aus dem Sandbehälter das den Reibwert erhöhende Mittel vor die Antriebsräder gesprüht wird.

Der Erfindung liegt demgegenüber die Aufgabe zugrunde, beim Anfahren oder Fahren eines Kraftfahrzeugs dafür zu sorgen, daß insbesondere unter winterlichen Verhältnissen eine gute Traktion in Verbindung mit sicherer Fahrstabilität erzielt wird.

## Vorteile der Erfindung

Die Erfindung löst diese Aufgabe mit den kennzeichnenden Merkmalen des Hauptanspruchs bzw. des Unteranspruchs und hat den Vorteil, daß den Reibbeiwert zur Erhöhung der Radhaftung auf der Straßenoberfläche verbessernde Mittel erst dann eingesetzt werden, wenn eine vorhandene Antriebsschlupfregelung anspricht, also es beim Anfahr- oder Fahrbetrieb zu einem Gleiten eines oder mehrerer Räder auf der Fahrbahnoberfläche kommt. Dann allerdings setzt die Wirkung einer Splittstreuanlage oder alternativ eines Schleuderkettensystems vollautomatisch ein, so daß in diesem Moment, in welchem sich die Fahrstabilität etwa eines Lastkraftwagens oder eines Omnibusses drastisch verschlechtert, beispielsweise also auf einer Steigstrecke Glatteis auftritt, die Aufmerksamkeit des Fahrers nicht abgelenkt wird und dieser sich völlig auf das Führen des Fahrzeugs konzentrieren kann. Die Erfindung stellt hierdurch auch sicher, daß auf jeden Fall die die Radhaftung im entscheidenden Moment stark erhöhenden Mittel wie Schleuderketten oder Splittstreuanlage tatsächlich aktiviert werden und es nicht durch die in diesem Moment durch das äußere Geschehen ohnehin stark in Anspruch genommene Aufmerksamkeit des Fahrers zu einer Unterlassung der Aktivierung dieser Systeme kommt. Die Erfindung stellt daher sicher, daß es beim Steigungsfahren mit einiger Sicherheit nicht zu einem Schrägstellen des mit einem solchen System ausgerüsteten Fahrzeugs kommen kann, auch wenn extrem ungünstige Straßenverhältnisse wie Glatteis u. dgl. vorliegen. Dabei können im Moment des Einsetzens der Antriebsschlupfregelung die die Radhaftung erhöhenden Systeme bei allen Rädern oder nur bei den Antriebsrädern aktiviert werden.

Durch die in den Unteransprüchen aufgeführten Maßnahmen sind vorteilhafte Weiterbildungen und Verbesserungen der Erfindung möglich. Besonders vorteilhaft ist die Möglichkeit, über Drosseln eine zeitliche Verzögerung der Stellzylinderansteuerung einzuführen, durch welche die die Radhaftung erhöhenden Mittel aktiviert werden. Somit lassen sich kurze ASR-Anforderungen herausfiltern. Ferner kann es vorteilhaft sein, einen Schalter für die Ansteuerung der Stellzylinder vorzusehen, so daß durch willkürlichen Eingriff des Fahrers auf festem Untergrund bzw. dann, wenn keine winterlichen Fahrbahnverhältnisse vorliegen, die Ansteuerung der Stellzylinder auf jeden Fall unterbunden wird.

## Zeichnung

Ausführungsbeispiele der Erfindung sind in der Zeichnung dargestellt und werden in der nachfolgenden Beschreibung näher erläutert. Es zeigen:

Fig. 1 ein erstes Ausführungsbeispiel der Erfindung, bei der die Ansteuerung der Stellzylinder für die Aktivierung von Schleuderketten oder der Splittstreuanlage direkt über ein vorhandenes ASR-Ventil erfolgt;

Fig. 2 eine ebenfalls schematisierte Darstellungsform zur Ansteuerung der Stellzylinder durch zum ASR-Ventil parallele Signalzuführung zu gesondert vorgesehenen elektromagnetischen Ventilen und

Fig. 3 eine schematisierte Ausführungsform, bei der elektromagnetische Ventile zur Aktivierung von Schleuderketten oder einer Splittstreuanlage unmittelbar von einem ABS/ASR-Steuergerät angesteuert werden.

## Beschreibung der Ausführungsbeispiele

Der Grundgedanke vorliegender Erfindung besteht darin, ergänzend vorgesehene, traktionsverbessernde Systeme, nämlich Schleuderketten oder eine Splittstreuanlage oder auch sonstige ergänzende Möglichkeiten durch Verknüpfung mit einer ohnehin vorgesehenen Antriebsschlupfregelung (ASR) automatisch zum Einsatz zu bringen, so daß sich Traktionsfähigkeit und Stabilität eines solchermaßen ausgerüsteten Kraftfahrzeugs in entscheidendem Maß verbessern lassen.

In der Zeichnung ist das ASR-System, welches auch als System zur Antriebsschlupfbegrenzung bezeichnet werden kann, nicht gesondert dargestellt, desgleichen auch nicht ein mit einem solchen ASR-System üblicherweise verknüpftes ABS-System, da beide Einrichtungen für sich gesehen hinlänglich bekannt sind und auch nicht beschrieben zu werden brauchen.

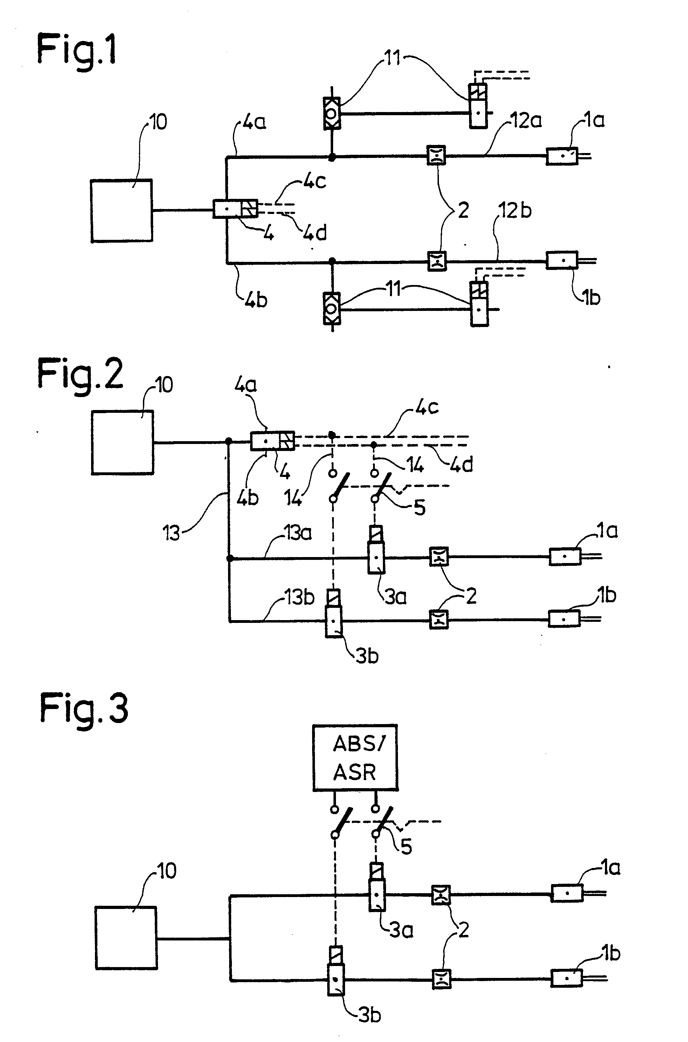

Ferner versteht es sich, daß die über die Hardware-Komponenten in der Darstellung der Figuren 1, 2 und 3 hinaus wirksamen, die erfindungsgemäße Grundfunktion realisierenden Schaltungen und Komponenten diskrete Schaltstufen oder Schaltblöcke sein können, vorzugsweise jedoch, ganz oder teilweise zusammengefaßt, entsprechende Bereiche von programmgesteuerten digitalen Systemen, also Mikroprozessoren, Rechner o. dgl. besetzen können, so daß die im folgenden besprochenen Ausführungsbeispiele der Erfindung diese lediglich bezüglich ihrer Grundfunktion und Wirkungsweise erläutern und nicht auf die dargestellte Ausführungsform beschränken.

Es sind jeweils Stellzylinder 1a, 1b vorgesehen, die durch Beaufschlagung mit einem geeigneten (pneumatischen oder hydraulischen) Druckmittel direkt die die Traktion verbessernden Systeme in Betrieb setzen. Eine ausführliche Erläuterung dieser Systeme ist entbehrlich, da auf die Darstellungen in den weiter vorn schon genannten Vorveröffentlichungen verwiesen werden kann, nämlich bezüglich des Einsatzes einer Splittstreuanlage als traktionsverbesserndes System auf die Veröffentlichung der Firma Robert Bosch GmbH, Stuttgart, und bezüglich eines Schleuderkettensystems in allgemeiner Ausführung auf die Veröffentlichung in der Zeitschrift Nutzfahrzeug. Die Stellzylinder 1a und 1b betätigen daher entweder unmittelbar Wellen oder Drehschieber im Bereich des Splittstreuers, können also beispielsweise als Splittstreuzylinder ausgebildet sein, wie in Bild 1 dieser Veröffentlichung angegeben, oder sie veranlassen über die Betätigung geeigneter Hebelsysteme vom mechanischen Ausgang jedes Stellzylinders 1a, 1b das Heranbringen von Schleuder ketten an die jeweils zu beaufschlagenden Räder des Fahrzeugs.

Im einzelnen kann hierzu noch ausgeführt werden, daß die hier bevorzugt als pneumatische Stellzylinder 1a, 1b ausgebildeten Endglieder beispielsweise über ein Hebelsystem oder ein Zahnstangen-Spindelgetriebe mit Kettensträngen versehene zusätzliche Räder gegen die Reifenflanken der Antriebsräder drücken, wodurch gleichzeitig diese die Kettenstränge tragenden Räder in Rotation versetzt und die Kettenstränge unter die Laufflächen der Reifen der zu beaufschlagenden Räder des Kraftfahrzeugs geschleudert werden.

Demgegenüber kann die Splittstreuanlage als zweites traktionsverbesserndes System alternativ, gegebenenfalls auch ergänzend eingesetzt werden, wobei dann die pneumatischen Stellzylinder 1a, 1b über Drehschieber die Ablauföffnungen von vor den Antriebsrädern montierten Splittbehältern öffnen und in Reifenbreite Splitt auf die Fahrbahn streuen.

In Fig. 1 ist eine Druckvorratsquelle mit 10 bezeichnet; diese führt den in ihr gespeicherten und auf vorgegebene Werte vorzugsweise konstant gehaltenen Druck des (pneumatischen) Druckmittels einem für sich gesehen bekannten ASR-Ventil 4 zu, welches über seine Ausgänge 4a, 4b in üblicher Weise zur Antischlupfregelung entsprechende Bremszylinder oder vorgeschaltete Komponenten 11 der Räder ansteuert, bei denen im Anfahr- oder Fahrbetrieb ein Durchdrehen, beispielsweise von ABS-Sensoren festgestellt worden ist.

Die Ansteuerung des ASR-Ventils, welches als doppelt wirkendes Ventil ausgebildet sein kann, erfolgt über elektrische Signalleitungen 4c, 4d von einem entsprechend ausgebildeten ASR-Steuergerät oder auch einem Rechner, bei dem bestimmte Teile zur Realisierung einer Antriebsschlupfregelung im Programmbereich belegt sind.

Die Ansteuerung kann auch von einem kombinierten ABS-/ ASR-Steuergerät erfolgen.

Man erkennt, daß bei Aktivierung des ASR-Ventils nicht nur letztlich den Radbremszylindern von der Druckquelle 10 das Druckmittel zugeführt wird, sondern über zu den Stellzylindern 1a, 1b weiterführende Druckmittelleitungen 12a, 12b auch diese beaufschlagt werden und daher eine entsprechende Aktivierung der an das ASR-Ventil angeschlossenen oder von diesem gesteuerten traktionsverbessernden Systemen erfolgt.

In einer vorteilhaften Ausgestaltung sind in die Leitungen 12a, 12b Drosseln 2 eingeschaltet, die für eine zeitliche Verzögerung der Ansteuerung der Stellzylinder 1a, 1b sorgen, so daß kurze oder kürzere ASR - Anforderungen herausgefiltert werden und die traktionsverbessernden Systeme nicht unnötig eingeschaltet werden, was beispielsweise bei einer Splittstreuanlage zu deren schneller Erschöpfung führen könnte.

Bei der in Fig. 2 dargestellten alternativen Ausführungsform sind zur Aktivierung der traktionsverbessernden Systeme über die Stellzylinder 1a, 1b gesonderte elektromagnetische Ventile 3a, 3b vorgesehen, deren Druckeinlässe über eine Zweigleitung 13 mit weiteren Verzweigungen 13a, 13b direkt an die von der Druckvorratsquelle 10 kommende Leitung angeschlossen sind, noch vor dem ASR-Ventil. Die Ansteuerung der elektromagnetischen Ventile 3a, 3b erfolgt parallel zu dem ASR-Ventil dadurch, daß dessen elektrische Signalleitungen seitenweise über Zweigleitungen 14a, 14b mit den entsprechenden elektromagnetischen Ventilen 3a, 3b verbunden sind.

Bei dieser Ausführungsform ist es möglich, über einen über die elektrischen Ansteuerleitungen 14a, 14b geschalteten Doppelschalter 5 die Zuführung der ASR-Signale an die elektromagnetischen Ventile 3a, 3b völlig zu unterbrechen, um bei Fahrbedingungen, bei denen der Einsatz traktionsverbessernder Systeme auf keinen Fall erforderlich ist, beispielsweise vorhandener fester Untergrund oder keine winterlichen Fahrbahnverhältnisse, die Versorgung der Stellzylinder 1a, 1b mit dem Druckmittel zu verhindern.

Schließlich ist es entsprechend der Ausführungsform der Fig. 3 möglich, die elektromagnetischen Ventile 3a, 3b, die die Stellzylinder 1a, 1b über die Drosseln 2 mit dem Druckmittel aus dem Vorrat 10 versorgen, unmittelbar zur elektrischen Ansteuerung mit dem ABS/ASR-Steuergerät zu verbinden, wieder unter Zwischenschaltung des (Doppel)Unterbrecherschalters 5.

Alle in der Beschreibung, den nachfolgenden Ansprüchen und der Zeichnung dargestellten Merkmale können sowohl einzeln als auch in beliebiger Kombination miteinander erfindungswesentlich

sein.

## Ansprüche

1. Verfahren zur Verbesserung von Traktion und Fahrstabilität bei Fahrzeugen, insbesondere Kraftfahrzeugen, Personenkraftwagen, Lastkraftwagen u. dgl., mit Aktivierung von die Radhaftung auf der Straßenoberfläche erhöhenden Mitteln (traktionsverbessernde Systeme wie Schleuderketten, Splittstreuanlage), dadurch gekennzeichnet, daß automatisch bei Einsetzen einer Antriebsschlupfregelung (ASR) deren Signale ausgewertet und Stellgliedern (1a, 1b) der die Radhaftung erhöhenden Mittel zugeführt werden.

2. Verfahren nach Anspruch 1, dadurch gekennzeichnet, daß die Druckmittelzufuhr zu den Stellgliedern für die traktionsverbessernden Systeme zur Unterdrückung kurzer ASR-Anforderungen gedrosselt erfolgt.

3. Vorrichtung zur Verbesserung von Traktion und Fahrstabilität bei Fahrzeugen, insbesondere Kraftfahrzeugen, Personenkraftwagen, Lastkraftwagen u. dgl., mit Aktivierung von die Radhaftung auf der Straßenoberfläche erhöhenden traktionsverbessernden Systemen (Schleuderketten, Splittstreuanlage), zur Durchführung des Verfahrens nach Anspruch 1 oder 2, dadurch gekennzeichnet, daß als pneumatische oder hydraulische Stellzylinder (1a, 1b) ausgebildete Stellglieder vorgesehen sind, die die traktionsverbessernden Systeme aktivieren und dann angesteuert sind, wenn sich Signale einer Antriebsschlupfregelung (ASR) ergeben.

4. Vorrichtung nach Anspruch 3, dadurch gekennzeichnet, daß die Stellzylinder (1a, 1b) mit den Druckmittel-Ausgangsleitungen (4a, 4b; 12a, 12b) eines ASR-Ventils (4) parallel zur Ansteuerung von Radbremszylindern verbunden sind.

5. Vorrichtung nach Anspruch 3 oder 4, dadurch gekennzeichnet, daß zusätzliche, mit einer Druckvorratsquelle (10) verbundene elektromagnetische Ventile (3a, 3b) vorgesehen sind, denen die elektrischen, zum ASR-Ventil (4) gelangenden Ansteuersignale parallel zu diesen zur gleichzeitigen Aktivierung der traktionsverbessernden Systeme zugeführt sind.

6. Vorrichtung nach einem der Ansprüche 3-5, dadurch gekennzeichnet, daß die elektromagnetischen, mit ihrem Ausgang mit den Stellzylindern (1a, 1b) verbundenen Ventile (3a, 3b) unmittelbar von einem ABS/ASR-Steuergerät angesteuert sind.

7. Vorrichtung nach einem der Ansprüche 3-6, dadurch gekennzeichnet, daß in die das Druckmittel den Stellzylindern (1a, 1b) zuführenden Leitungen Drosseln (2) geschaltet sind zur zeitlichen Verzögerung der Stellzylinderansteuerung bei nur kurzen ASR-Anforderungen.

8. Vorrichtung nach einem der Ansprüche 3-7, dadurch gekennzeichnet, daß die pneumatischen Stellzylinder (1a, 1b) über ein Hebelsystem oder ein Zahnstangen-Spindelgetriebe mit Kettensträngen versehene Räder gegen die Reifenflanken der Antriebsräder des Kraftfahrzeugs drücken (Schleuderkettensystem).

9. Vorrichtung nach einem der Ansprüche 3-7, dadurch gekennzeichnet, daß die Stellzylinder (1a, 1b) Drehschieber in Ablauföffnungen von vor den Antriebsrädern angeordneten Splitbehältern öffnen (Splittstreuanlage als traktionsverbesserndes System).

10. Vorrichtung nach einem der Ansprüche 3-9, dadurch gekennzeichnet, daß die Ansteuerung der Stellzylinder (1a, 1b) selektiv auf das Rad bezogen erfolgt, bei dem von den Sensoren bei Durchdrehen festgestellt wird.

# Fig.1

# Fig.2

# Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0 078 392 (WABCO WESTINGHOUSE)<br>* Zusammenfassung; Figur 1 *<br>--- | 1,3,10 | B 60 T 8/56<br>B 60 B 39/00 |
| A | EP-A-0 180 095 (TOYOTA )<br>* Seite 1, Absatz 1; Seite 11, Absatz 3<br>- Seite 12, Absatz 1; Figuren 1,2a *<br>--- | 1,3,6 | |
| A | DE-B-1 175 263 (KRAUS-MAFFEI)<br>* Spalte 1, Zeilen 16-22; Spalte 2,<br>Zeilen 26-34; Spalte 3, Zeile 49 -<br>Spalte 4, Zeile 37; Figur 1 *<br>--- | 1-3,5,7 | |
| A | EP-A-0 221 353 (DAIMLER BENZ)<br>* Zusammenfassung; Spalte 3, Zeile 32 -<br>Spalte 4, Zeile 5; Figur 1 *<br>--- | 1,3,4 | |
| A | EP-A-0 162 823 (ONSPOT)<br>* Zusammenfassung; Figuren 1,2 *<br>--- | 8 | |
| A,D | ROBERT BOSCH GMBH, October 1956,<br>VDT-UBB 160, Stuttgart, DE;<br>"BOSCH-Splittstreuer"<br>--- | 9 | **RECHERCHIERTE SACHGEBIETE (Int. Cl.5)** |
| A | FR-A- 590 801 (DHERS)<br>* Insgesamt *<br>----- | | B 60 T<br>B 60 B |

Der vorliegende Recherchenbericht wurde für alle Patentansprüche erstellt

| Recherchenort | Abschlußdatum der Recherche | Prüfer |
|---|---|---|
| DEN HAAG | 10-10-1989 | MEIJS P.C.J. |